# EUROPEAN PATENT APPLICATION

(11) **EP 3 150 312 A1**
(43) Date of publication of application: **05.04.2017**
(21) Application number: 16189061.1
(22) Date of filing: 15.09.2016
(51) Int. Cl.: B23C 3/18, F01D 5/34

(54) **INTEGRALLY BLADED DISK WITH FLOW PATH TRENCHES AND METHOD OF FORMING SUCH A FLOW PATH TRENCH**

(30) Priority: 29.09.2015 US 201514868481
(71) Applicant: United Technologies Corporation, Farmington, CT 06032 (US)
(72) Inventor: WILBER, John E., East Hampton, CT Connecticut 06424 (US); QUINN, Ryan H., Manchester, CT Connecticut 06040 (US)
(74) Representative: Hall, Matthew Benjamin

(57) **Abstract**

A method of forming a flow path trench (516) in an integrally bladed disk (500) is provided. The method includes tilting a cutting tool (530) relative to a plane defined by the integrally bladed disk (500), driving the cutting tool (530) at a cutting speed, and moving the cutting tool (530) in a multiple dimensional movement to cut a flow path trench (516) in a surface of the integrally bladed disk (500). An integrally bladed disk (500) is also provided, the bladed sisk comprising a rotor disk having a rim (204; fig 2A), the periphery of which forms a flow surface (210; fig. 2A) and integrally formed blades (508) circumferentially spaced and extending radially outward from the rim (204; fig.2A) to define a flow path (224; fig. 2A) therebetween, wherein a base of each of the blades (508) has a fillet (222; fig. 2A). The integrally bladed disk (500) also comprises a plurality of flow path trenches (516) formed in the rim (204; fig. 2A) and disposed adjacent and between the blades (508) along the flow surface (210; fig. 2A), each flow path trench (516) having a smooth trench surface (317; fig. 3B).

## Description

### BACKGROUND

The subject matter disclosed herein generally relates to gas turbine engines and, more particularly, to flow path trenches and methods of forming the same on integrally bladed disks in gas turbine engines.

The fan, turbine, and compressor sections of gas turbine engines include one or more circumferentially extending rows or stages of airfoils, commonly called rotor blades, which are axially spaced between rows or stages of fixed airfoils (stator vanes). The rotor blades are connected to and extend radially outwardly from a rotor disk. During operation the centrifugal loads generated by the rotational action of the rotor blades must be carried by the rotor disk within acceptable stress limits.

Conventional rotor blades are carried in the rotor disk by a dovetail or fir tree root which slides into and interlocks with a corresponding dovetail slot in the perimeter of the rotor disk. However, as the number of rotor blades around the perimeter of the disk increases, insufficient material is available for supporting the plurality of rotor blades within acceptable stress limits. Accordingly, integrally bladed disks have been developed and are commercially used. Integrally bladed disks do not utilize the interlocked dovetail design but instead are integrally joined to the rotor blades as a single-piece, unitary assembly by milling, forging, casting, or other known manufacturing operations.

Integrally bladed disks can be used to increase aerodynamic efficiency of the gas turbine engine, with an integral formation of the blades enabling a reduction in the stresses associated with supporting the rotor blades. One of the stresses associated with supporting the rotor blades is a hoop stress. The hoop stress is defined as a load measured in the direction of the circumference of a rotating body, the load being created by thermal gradients and centrifugal forces acting in a radial direction outward from the axis of rotation of the body. The hoop stress is particularly acute where the gas turbine engine utilizes integrally bladed disks. Integrally bladed disks may develop fractures along their perimeter during a lifecycle of a product due to the aforementioned hoop stresses and principle stresses. Accordingly, it may be advantageous to reduce the stresses on the integrally bladed disks.

### SUMMARY

One solution is to form flow path trenches in surfaces of the integrally bladed rotor. Such flow path trenches may be configured near an intersection of a blade and a rotor disk. The geometry of the flow path trenches and location of the flow path trenches can be formed and configured to achieve a desired reduction in the hoop and principle stresses incurred on the integrally bladed disk during operation.

According to one embodiment, a method of forming a flow path trench in an integrally bladed disk is provided. The method includes tilting a cutting tool relative to a plane defined by the integrally bladed disk, driving the cutting tool at a cutting speed, and moving the cutting tool in a multiple dimensional movement to cut a flow path trench in a surface of the integrally bladed disk.

In addition to one or more of the features described above, or as an alternative, further embodiments of the method may include that a relative incline of a cutting action is between and including 2° and 30°, wherein the relative incline is a combination of the tilting of the cutting tool and the multiple dimensional movement.

In addition to one or more of the features described above, or as an alternative, further embodiments of the method may include that the tool includes a dovetail shaped cutting head.

In addition to one or more of the features described above, or as an alternative, further embodiments of the method may include performing a plurality of cuts, with each subsequent cut performed at an increasingly higher cutting speed and/or at a greater cutting depth.

In addition to one or more of the features described above, or as an alternative, further embodiments of the method may include that the cut is performed in a final single pass of the cutting tool over a surface of the integrally bladed disk.

In addition to one or more of the features described above, or as an alternative, further embodiments of the method may include that the flow path trench is a feature that causes a discontinuity in a hoop direction of the integrally bladed disk.

In addition to one or more of the features described above, or as an alternative, further embodiments of the method may include that the flow path trench is cut with a trench surface having a smooth surface created by a single tool pass.

In addition to one or more of the features described above, or as an alternative, further embodiments of the method may include that the cut is performed twice to form the flow path trench with a single scallop in a trench surface.

In addition to one or more of the features described above, or as an alternative, further embodiments of the method may include that the cut is performed three times to form the flow path trench with two scallops in a trench surface.

In addition to one or more of the features described above, or as an alternative, further embodiments of the method may include that an integrally bladed disk is formed by the method.

According to another embodiment, an integrally bladed disk is provided. The integrally bladed disk includes a rotor disk having a rim the periphery of which forms a flow surface and integrally formed blades circumferentially spaced and extending radially outward from the rim to define a flow path therebetween, wherein a base of each of the blades has a fillet. A plurality of flow path trenches are formed in the rim and disposed adjacent and between the blades along the flow surface, each flow path trench having a trench surface defined as a cut surface of the flow path trench, wherein the trench surface is smooth.

In addition to one or more of the features described above, or as an alternative, further embodiments of the integrally bladed disk may include that the flow path trench is formed by a single pass of a cutting tool.

In addition to one or more of the features described above, or as an alternative, further embodiments of the integrally bladed disk may include that the flow path trench is a feature that causes a discontinuity in a hoop direction of the integrally bladed disk.

In addition to one or more of the features described above, or as an alternative, further embodiments of the integrally bladed disk may include that the flow path trench includes a single scallop in the trench surface.

In addition to one or more of the features described above, or as an alternative, further embodiments of the integrally bladed disk may include that the flow path trench includes two scallops in the trench surface.

In addition to one or more of the features described above, or as an alternative, further embodiments of the integrally bladed disk may include that the flow path trench is formed by two or more passes of a cutting tool.

According to another embodiment, a gas turbine engine having a stress relief feature is provided. The engine includes a rotor disk having a rim the periphery of which forms a flow surface and integrally formed blades circumferentially spaced and extending radially outward from the rim to define a flow path therebetween, wherein a base of each of the blades has a fillet, and wherein the blades and the rotor disk define an integrally bladed disk. A plurality of flow path trenches are formed in the rim and disposed adjacent and between the blades along the flow surface, each flow path trench having a trench surface defined as a cut surface of the flow path trench, wherein the trench surface is smooth, wherein the flow path trench is a feature that causes a discontinuity in a hoop direction of the integrally bladed disk.

In addition to one or more of the features described above, or as an alternative, further embodiments of the engine may include that the flow path trench is formed by a single pass of a cutting tool.

In addition to one or more of the features described above, or as an alternative, further embodiments of the engine may include that the flow path trench is formed by two or more passes of a cutting tool.

In addition to one or more of the features described above, or as an alternative, further embodiments of the engine may include that the flow path trench includes at least one scallop in the trench surface.

Technical effects of embodiments of the present disclosure include a tool and method of using the same to form flow path trenches in integrally bladed disks that have reduced stresses. Further technical effects of embodiments include cutting a trench in an integrally bladed disk using a single pass and forming a smooth trench surface. Further technical effects of embodiments include eliminating stress concentration factors that arise in other trench formation process. Further technical effects of embodiments include a smooth surfaced trench that enables smooth and predictable airflow over the surface of the flow path trenches. Further technical effects of embodiments include flow path trenches that improve stress and strain at different points on an integrally bladed disk by breaking hoop stress.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic sectional view of one embodiment of an aircraft turbofan engine;
FIG. 2A is a perspective view of a circumferential section of one embodiment of an integrally bladed rotor disk having flow path trenches in the perimeter thereof;
FIG. 2B is a radial sectional view of the integrally bladed rotor disk illustrated in FIG. 2A;
FIG. 2C is a top perspective view of the perimeter of the integrally bladed rotor disk illustrated in FIG. 2A;
FIG. 3A is a perspective view of an integrally bladed disk in accordance with an embodiment of the present disclosure;
FIG. 3B is a detailed view of the integrally bladed disk of FIG. 3A with a tool in accordance with an embodiment of the present disclosure positioned in relation to the integrally formed disk;
FIG. 4A is a front side view of a tool in accordance with an embodiment of the present disclosure;
FIG. 4B is a front side view of the tool of FIG. 4A tilted at a 5° angle;
FIG. 4C is a right side view of the tool of FIG. 4A tilted at a 5° angle;
FIG. 4D is a front side view of the tool of FIG. 4A tilted at a 10° angle;
FIG. 4E is a right side view of the tool of FIG. 4A tilted at a 10° angle;
FIG. 5A is a perspective view of a tool positioned in relation to an integrally bladed disk in accordance with an embodiment of the present disclosure;
FIG. 5B is perspective view of the tool and integrally bladed disk of FIG. 5A indicating movement of the tool with respect to the integrally bladed disk;
FIG. 5C is an alternative perspective view of the tool and integrally bladed disk of FIG. 5A indicating movement of the tool with respect to the integrally bladed disk;
FIG. 5D is an alternative perspective view of the tool and integrally bladed disk of FIG. 5A indicating movement of the tool with respect to the integrally bladed disk;
FIG. 6 is a process flow of forming an integrally bladed disk in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

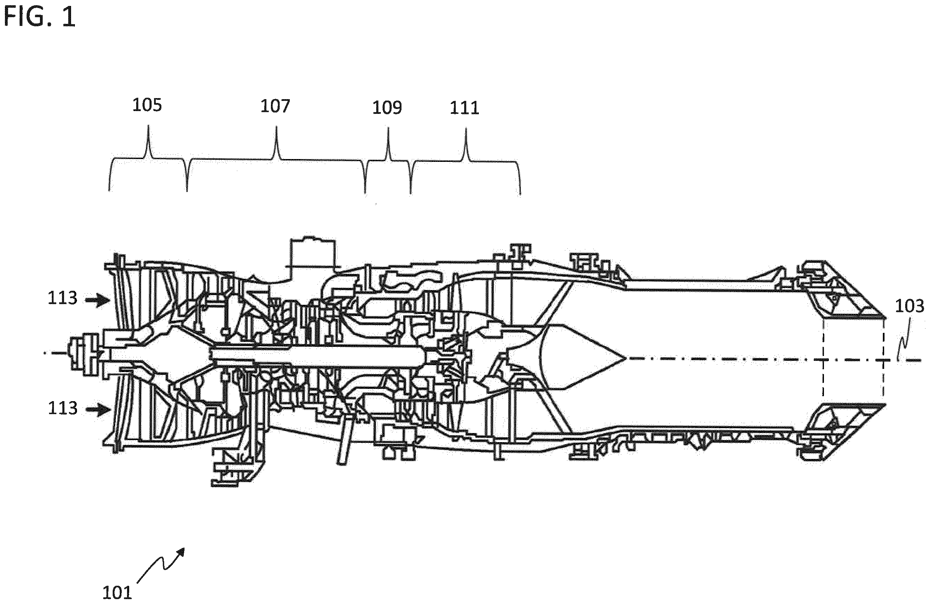

FIG. 1 shows an axial cross-section of gas turbine engine 101 including an engine axis 103, a fan section 105, a compressor section 107, a combustor section 109, and a turbine section 111. The fan section 105 includes a casing that surrounds a rotor to which the blades of a fan are attached. Although one example of a gas turbine engine is shown, those of skill in the art will appreciate that other types and configurations of gas turbine engines may employ embodiments described herein. Thus, FIG. 1 is provided for explanatory and illustrative purposes and is not intended to be limiting.

In operation, an air stream 113 is pulled into the front of engine 101 by the rotation of the fan blades of the fan section 105 about the engine axis 103. The fan section 105 directs a portion of the air stream 113 into the compressor section 107. The air stream 113 is successively compressed through stages of airfoils in the compressor section 107 and is directed into the combustor section 109. The portion of the air stream 113 that passes through the compressor section 107 is mixed with fuel and ignited in the combustor section 109 and is then directed into the turbine section 111 where the mixture is successively expanded through alternating stages of airfoils comprising turbine rotor blades and stator vanes. A portion of the gas and fuel mixture leaving the combustor section 109 acts to rotate a turbine in the turbine section 111, which powers the fan section 105 and the compressor section 107. The remaining portion of the gas and fuel mixture passing through the turbine section 111 exits the back of the engine 101 to provide thrust for the engine 101. Operating criteria such as the desired size, weight, and thrust capacity of the gas turbine engine 101 and the acceptable stress limits due to centrifugal loads and thermal stresses experienced in some sections or stages of engine 101 can necessitate that the rotor blades be integrally bladed to rotor disks. As used herein, "integrally" means that the blades of the disk are formed from the same piece and material as the disk itself, and thus a single, unitary piece or product is formed with a disk having a plurality of blades formed at a circumference of the disk. That is, the blades cannot, without being damaged, be separated or detached from the disk, but rather are one piece.

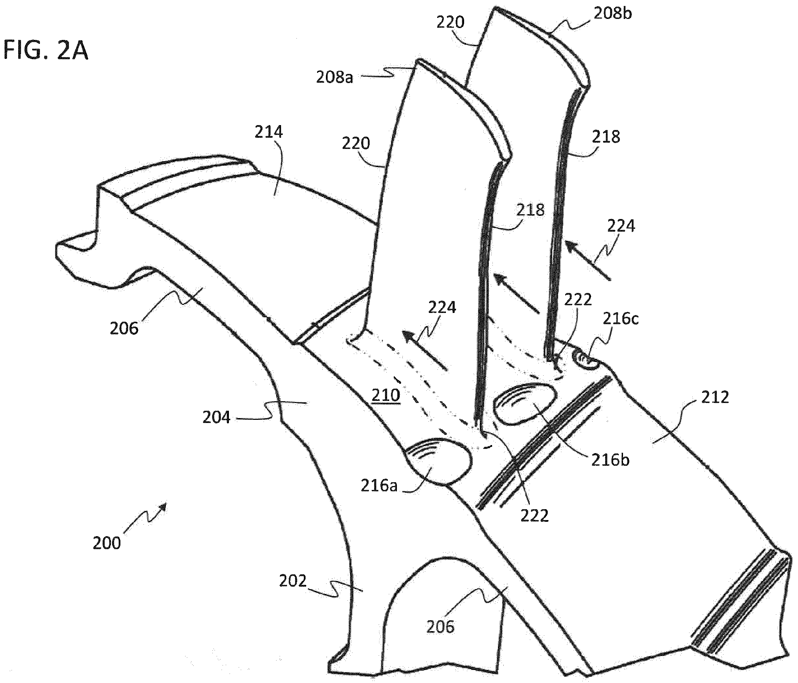

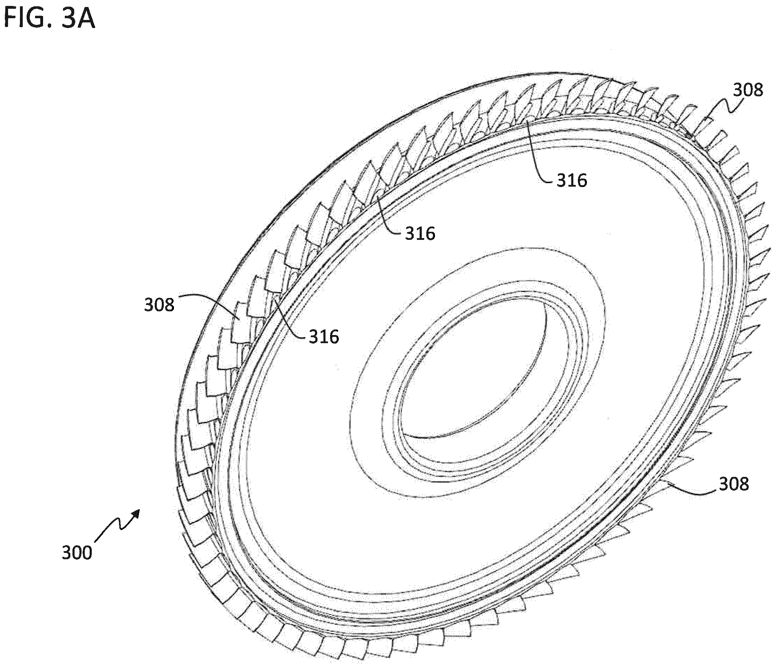

FIGS. 2A-2C are views from various perspectives of a circumferential portion of one embodiment of an integrally bladed disk 200. The integrally bladed disk 200 is configured to be connected to a rotor in one or more of the various stages of the engine 101 (FIG. 1), including the fan section 105, the compressor section 107, and/or the turbine section 111. The integrally bladed disk 200 includes a hub (not shown), a web 202, a rim 204, arms 206, and rotor blades or airfoils 208a and 208b. The rim 204 includes a flow surface 210, a forward coat bed 212, an aft coat bed 214, and flow path trenches or dimples 216a, 216b, and 216c. Each airfoil 208a, 208b includes a leading edge 218, a trailing edge 220, and a fillet 222. As will be appreciated by those of skill in the art, the forward coat bed 212 and the aft coat bed 214 may include coatings or other surface treatments that are not show for simplicity. Further, as shown, the flow path trenches 216a, 216b, and 216c are shown on the leading edge, however, those of skill in the art will appreciate that flow path trenches may be formed additionally or alternatively on the trailing edge, with respect to the airfoils, as shown for example in FIG. 3A.

FIG. 2A shows the integrally bladed disk 200 and illustrates the radially innermost hub (not shown) (innermost relative to the engine axis 103 shown in FIG. 1) which is connected to the rim 204 by the web 202. The arms 206 extend axially forward and aft (as defined by the flow direction of a working fluid moving relative to engine axis 103 and passing across the integrally bladed disk 200) of the rim 204. The airfoils 208a, 208b comprise a portion of a row of blades (not shown) and extend generally radially outwardly of the rim 204 in a unitary or single-piece manner. The flow surface 210 comprises the radial outer periphery of the rim 204 adjacent the airfoils 208a, 208b. The flow surface 210 extends axially from the forward coat bed 212 to the aft coat bed 214 as defined by the flow direction of a working fluid passing across the flow surface 210. The flow surface 210 also extends circumferentially between the airfoils 208a, 208b. The flow path trenches 216a, 216b, 216c illustrated in FIGS. 2A-2C, are disposed circumferentially adjacent each of the rotor blades in the row of rotor blades. The trench 216b is disposed circumferentially adjacent both the airfoils 208a, 208b. As will be appreciated by those of skill in the art, the geometry of the flow path trenches and location of the flow path trenches can be modified in various embodiments of the integrally bladed disk to achieve a desired reduction in the hoop and principle stresses incurred on the integrally bladed disk during operation. The location and geometry of the flow path trenches can be optimized to design criteria using commercially available finite element analysis and computational fluid dynamics software, as known in the art.

Each airfoil 208a, 208b is integrally connected to or formed out of the rim 204 and has a conventional aerodynamic configuration with a generally concave pressure side and generally convex suction side for pressurizing the working fluid during operation. The airfoils 208a, 208b extend from the leading edge 218 to the trailing edge 220. The fillet 222 aerodynamically transitions the root or base portion of each airfoil 208a, 208b from the flow surface 210 of the rim 204. Each airfoil 208a, 208b defines, along with the blades disposed circumferentially adjacent to it (not shown), flow paths 224 through which the working fluid is channeled during operation. The radially inward part of the flow paths 224 is defined by the flow surface 210 and flow path trenches 216a, 216b, 216c.

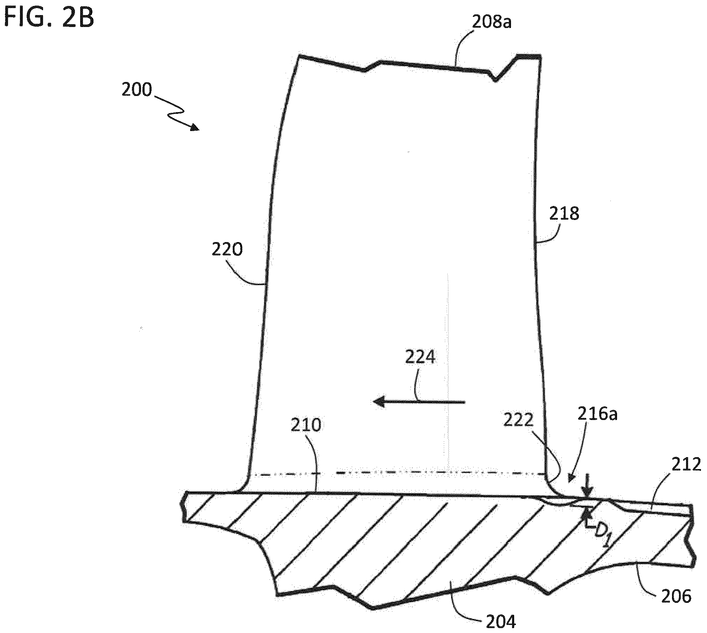

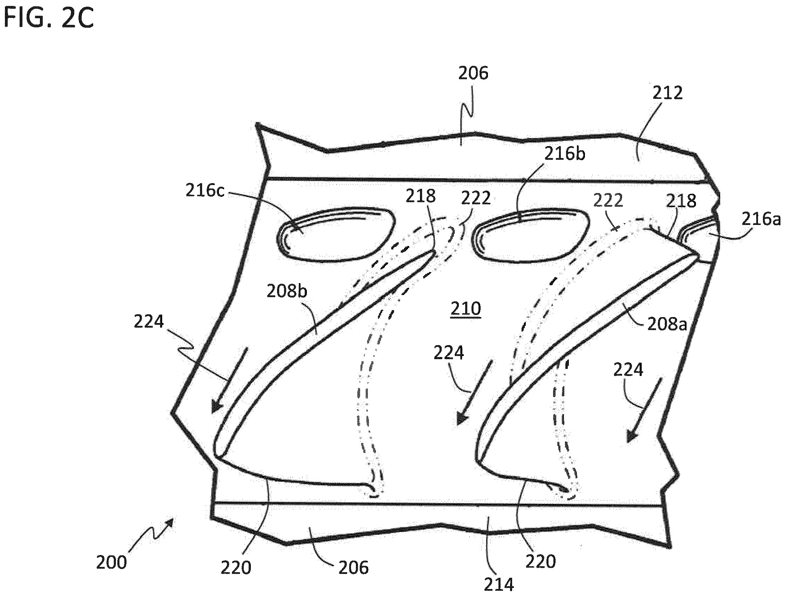

The geometry of the flow path trenches 216a, 216b, 216c can vary depending on criteria such as the application of the integrally bladed disk 200 within the engine 101 (FIG. 1) and the desired and acceptable stress tolerances. The flow path trenches 216a, 216b, 216c shown in FIGS. 2A-2C, are depressions in the rim 204 along the flow surface 210 where air (working fluid) flowing along the integrally bladed disk 200 makes a transition in flow direction. More generally, for the purpose of this application, "trench" or "depression" means a feature that causes a discontinuity in the hoop direction of an integrally bladed disk 200. As shown in FIGS. 2B and 2C, the flow path trenches 216a, 216b, 216c are disposed axially aft (as defined by the flow direction of a working fluid moving relative to the engine axis 103 and passing across the integrally bladed disk 200) of the forward coat bed 212 of the flow surface 210 but extend axially forward and rearward of the leading edges 218 of the airfoils 208a, 208b. In particular, the deepest point of the flow path trenches 216a, 216b, 216c are disposed to circumferentially align with a location of highest stress concentration (a life limiting location) at a leading edge of the fillet 222 of each airfoil 208a, 208b.

As shown in FIG. 2B, the trench 216a has a depth D1. If a milling tool is used to form the flow path trenches, a radius of the flow path trenches can vary because, for example, the diameter of the head of the milling tool can vary. However, flow path trenches formed as described herein may eliminate the variable radius or eliminate the radius entirely by forming a sharp edge at the trailing edge. The distance the airfoils 208a, 208b are circumferentially spaced apart will vary as design criteria dictates. The flow path trenches 216a, 216b, 216c extend circumferentially to adjacent the fillet 222 of each airfoil 208a, 208b. In other embodiments, the flow path trenches 216a, 216b, 216c can be milled to extend into the fillet 222 and/or can extend to the forward coat bed 212 of the rim 204 or the aft coat bed, depending on the location of the trench.

The flow path trenches 216a, 216b, 216c cause the working fluid channeled through the flow paths 224 along the flow surface 210 to change direction. This change in the direction of the flow reduces thermal and load induced principle stresses and the hoop stress on the integrally bladed disk 200. In particular, the flow path trenches 216a, 216b, 216c are configured to reduce stress concentrations at the rim 204 adjacent the leading edges 218 and the pressure side of the airfoils 208a, 208b. By utilizing the flow path trenches 216a, 216b, 216c as opposed to a conventional integrally bladed disk, a hoop stress reduction and a reduction in principle stresses for the integrally bladed disk 200 can be achieved. This stress reduction increases the operation life cycle for the integrally bladed disk 200 when compared to conventional integrally bladed disks without flow path trenches. As will be appreciated by those of skill in the art, flow path trenches formed at the trailing edge of the airfoils may cause the working fluid to change direction after flowing past the airfoils, i.e., when the working fluid passes the rotor. Such effects on the airflow at the trailing edge may similarly reduce the stresses on the integrally bladed disk 200.

Various methods of generating the flow path trenches have been proposed. For example, a multi-pass cutting of the disk with a small diameter ball mill may generate the flow path trenches. However, the end result of using a small diameter ball mill is a surface that has many scallops, or ridges within the trench surface. The scallops, because they are variable, cannot be modeled into a flow path of structural analysis software, and as such, a debit related to the scallops must be taken into account. This debit is taken into account, in modeling, by applying a stress concentration factor, KT, to the stress results from the structural analysis model.

That is, when employing a multipass operation to cut a surface, scallops or cusps may form in the surface at the interface between adjacent cuts, i.e., between each cut made during a multipass operation. These scallops may result in a surface that is less than ideal, i.e., the surface is not smooth. The less than ideal surface may result in higher stresses at the locations of the cuts and scallops. During modeling of parts, particularly modeling parts that are cut by a multipass operation, a stress concentration factor, KT factor, is assessed when the model is made as if it has no scallops, but the part in fact does have scallops. The KT factor is a factor that artificially increases the stress in the modeled part to mimic the effect of having scallops in the real part. Such scallops, and such modeling, may be insufficient to generate an extended life integrally bladed disk.

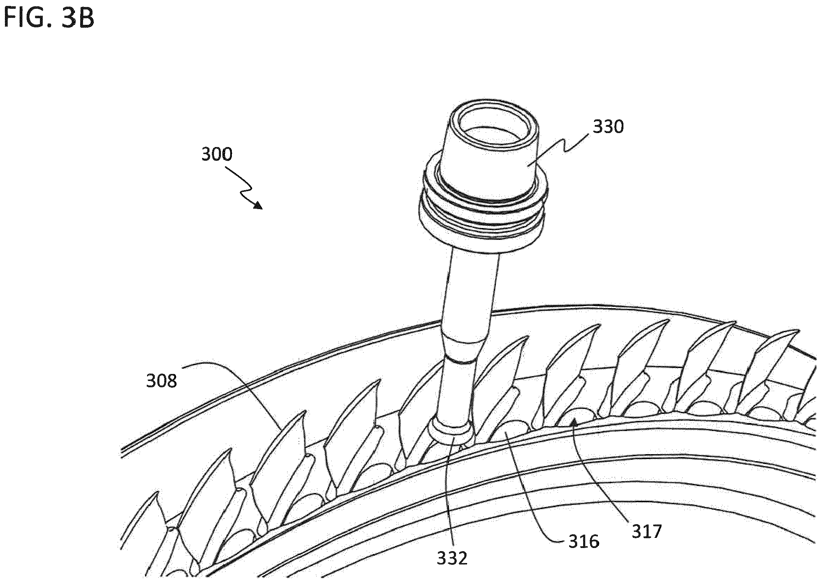

Turning to FIGS. 3A and 3B, an integrally bladed disk 300 and tool in accordance with the present disclosure are shown. FIG. 3A shows a perspective schematic view of the integrally bladed disk 300. FIG. 3B shows a detailed schematic view of a tool 330 that is used to cut, form, mill, and/or grind portions of the integrally bladed disk 300, such as flow path trenches as described above.

The integrally bladed disk 300 includes a plurality of airfoils 308. The airfoils 308 may have similar construction to that described above. Between adjacent airfoils 308 around the integrally bladed disk 300 is at least one flow path trench 316. A tool 330, shown in FIG. 3B, is configured to cut or form the flow path trenches 316 in the integrally bladed disk 300, such as at the locations described above, or in other locations. Each trench 316 may have a trench surface 317 which is the material surface of the cut trench.

The tool 330 may be used to create a larger single pass cut with a shaped cutter 332. In some embodiments, advantageously, the single pass geometry formed by the shaped cutter 332 may be modeled true and analyzed as such without stress concentration (KT) factors applied. The special shape, i.e., large single pass cut, enabled by the tool 330 may allow the cutter geometry to get into and between the airfoils 308 and the related blade fillet radius (see, FIG. 2A-2C). Advantageously, various embodiments of the tool described herein may create geometry that cannot be produced by conventional cutters using a single pass method. In some embodiments, the size and location of the trench geometry is enabled by the use of special form cutter, e.g., "Dovetail" style, configuration described below and a multi-axis, e.g., XYZ, motion of a cutting machine.

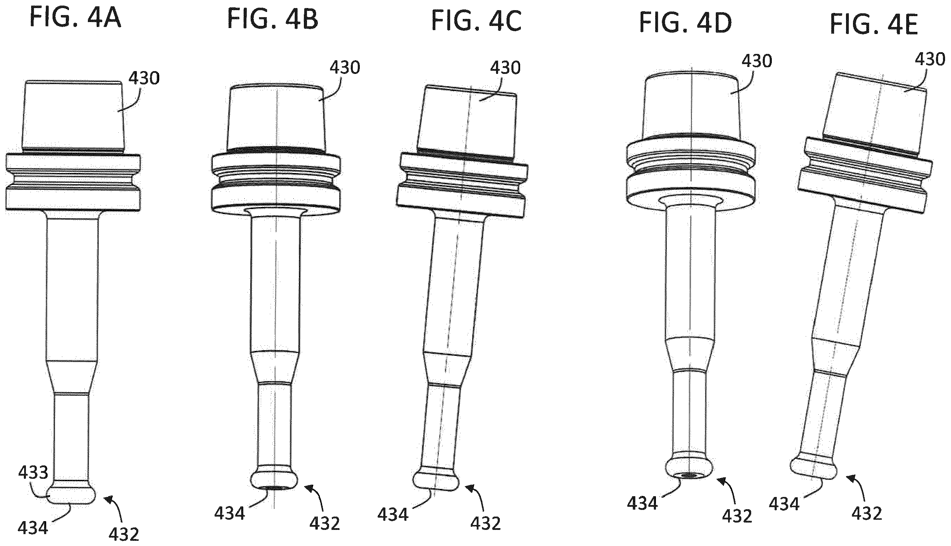

Turning to FIG. 4A, a schematic illustration of a tool 430 in accordance with an embodiment is shown. The tool 430, which is shown in normal view (down a centerline axis), has the ability to gain clearance to adjacent features due to its dovetail configuration. That is, the tool 430 includes a dovetail shaped cutting head 432. As shown, the cutting head 432 may have a curved or rounded cutting surface 433 and a circular bottom or tool face 434.

FIGS. 4B and 4C show the tool 430 as inclined at an angle of 5°. As shown, the tool face 434 of the tool 430 may have a generally circular shape, and when inclined may present an elliptical cutting surface when engaged with a surface of an integrally bladed disk. FIGS. 4D and 4E show the tool 430 as inclined at an angle of 10°. Because of the different angle of inclination, the tool 430 may be able to cut various different depths and/or configured flow path trenches. Those of skill in the art will appreciate that any angle of inclination may be used, without departing from the scope of the present disclosure.

Further, the combination of the tilt angle of the tool and the three dimensional movement or motion of the tool may result in a "relative incline." The relative incline is the combination of the tilt angle of the tool plus the angle or degree of motion of the tool as it interacts with a surface. Thus, in one non-limiting example, a tilt angle of the tool may be set to 5° and the motion of the tool as it cuts through a surface may be at 7° with respect to the surface, thus generating the relative incline. Accordingly, a wide variety of relative angles may be employed to achieve a desired cut in a surface. In some non-limiting embodiments, the relative angle may be between 2° and 30°, although relative angles outside this range are contemplated and may be used depending on the desired cut and resulting trench configuration.

In the example of FIGS. 4B and 4C, a low angle of inclination may result in a trench that is relatively wide and shallow, because the ellipse formed by the tool face 434 may be relatively narrow. In contrast, in the example of FIGS. 4D and 4E, the higher angle of inclination may result in a deeper and/or narrower trench because the ellipse formed by the tool face 434 as it cuts is wider. As will be appreciated by those of skill in the art, a resultant elliptical motion of the tool face 434 with respect to a surface being cut may vary with the cutter diameter (e.g., cutter head diameter and/or tool face), corner radius (e.g., the curvature/shape of the dovetail of the cutter), and/or the tilt angle.

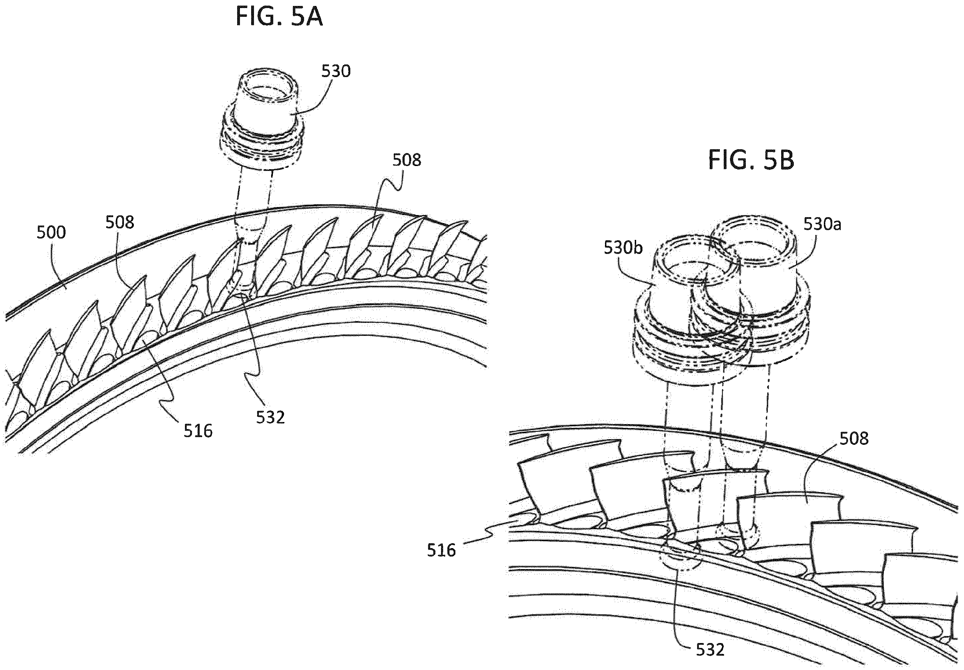

In addition to the angle of inclination of the tool and cutting face, the tool may be driven by a multi-axis machine. In some embodiments, the tool may be moved or operated in an XYZ space, i.e., in three dimensions. Turning to FIGS. 5A-5D various schematic views of a tool 530 cutting an integrally bladed disk 500 having a plurality of airfoils 508 are shown. FIG. 5A shows the tool 530 in a first position with a dovetail shaped cutter 532 located at an end thereof. The tool 530 may be angled, e.g., as shown in FIGS. 4A-4C, and further moved through a three dimensional movement when cutting a trench 516 in the integrally bladed disk 500. Because of the shape, size, and configuration of the tool 530, the cutter 532 may be positioned between two adjacent airfoils 508. The tool 530 can then be operated such that it cuts a trench 516 into a surface of the integrally bladed disk 500.

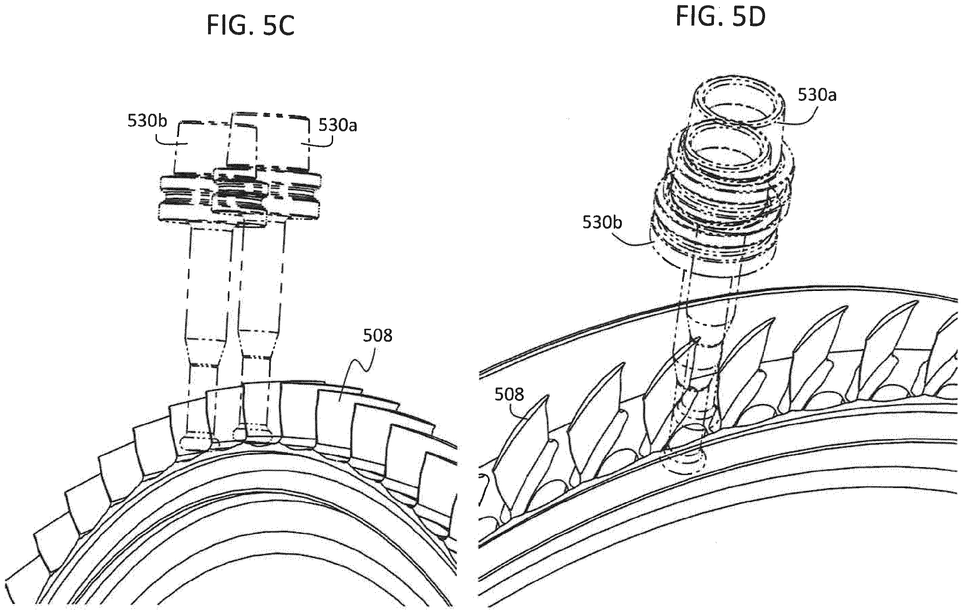

Turning to FIG. 5B, a schematic illustration of the motion of the tool 530 as it cuts a trench 516 is shown. The tool 530a shows the tool 530 in a first position between two adjacent airfoils 508. As the trench 516 is cut, the tool 530 moves outward from between the airfoils 508 (e.g., normal or axially with respect to a plane/axis of the disk), rotates relative to the airfoil (e.g., circumferentially with respect to the disk), and downward (e.g., radially with respect to the disk). Thus, the tool 530 may move to a second position 530b, as shown in FIG. 5B. FIG. 5B shows a schematic view of the axial motion of the tool 530. FIG. 5C shows an alternative schematic view of the cutting action or motion, indicating the downward or radial movement of the tool 530 from the first position 530a to the second position 530b. FIG. 5D shows an alternative schematic view of the cutting action or motion showing the circumferential motion.

In this fashion, a single pass, large cut may be made in the surface of the integrally bladed disk. Accordingly, smooth flow path trenches may be formed, i.e., without scallops, thus providing improved airflow over the surfaces of the integrally bladed disk. Thus, the generation or production of scallops or other artifacts in the surface of the integrally bladed disk where it is cut by a tool may be eliminated. That is, a trench surface, i.e., the material surface of the cut trench, may be smooth and not include any scallops or other cutting artifacts.

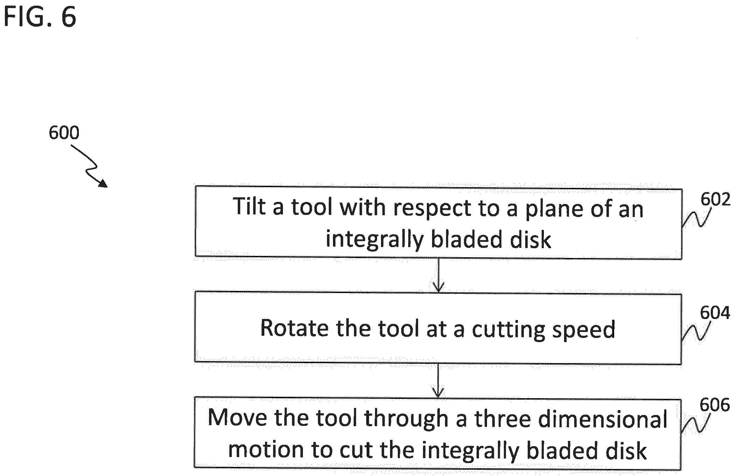

Turning now to FIG. 6, a process flow of forming flow path trenches in an integrally bladed disk is shown. The process flow 600 may be used employing a tool as described above, or variations thereon. The tool will be tilted by a machine, such as a multi-axis cutting machine, at step 602. The tilt of the tool may be made with respect to a plane of a workpiece, such as an integrally bladed disk. The tool may then be rotated or driven at a cutting speed at step 604. The tilted and rotating tool may then be moved through multiple dimensional movement to perform a cut in the workpiece. The multiple dimensional movement may be made with respect to a cut surface of the workpiece, or to any other reference point. Thus, a trench may be cut in the workpiece.

The flow process 600 may be repeated multiple times over a single area to generate a desired trench configuration. In some embodiments, multiple passes in the same location may be made at increasingly higher rotational speeds and/or depths of cut to form a desired cut in the surface of the workpiece. For example, multiple tool passes may be carried out in a location to obtain a final desired trench geometry, such as depth, width, curvature, etc. Further, in accordance with some embodiments, additional and/or alternative steps may be performed without departing from the present disclosure. For example, a general shape or configuration of a trench may be cut using a small ball mill and then subsequently a single pass of a larger cutting tool, e.g., a tool as described above, may be used to provide a smooth finish to a trench surface.

Embodiments of the tool described herein can enable a single cut to generate a trench using a large diameter ball mill (or other large cutting tool). Advantageously, the result of the large single pass cut is that there are no scallops. The geometry that is modeled and analyzed structurally is the actual geometry generated by the tool. As a result, no additional debit, i.e., KT factor, is required on the part.

Moreover, because the tool as described herein may be able to make single cut passes, while moving about multiple axes, including tilt and three dimensional movement, the shape, size, geometry, etc. of the trench may be varied and configured as desired. Thus, a single elliptical shape may not be the only type of trench formed by the tools described herein. Further, the depth and/or width of the formed trench may be varied by changing the tilt of the tool with respect to the cut surface during cutting.

In alternative embodiments, a two or three pass trench may be formed using tools as described herein and is able to be modeled in order to distribute the stress across a larger area. The result of using a small, finite number of passes to cut the trench is that the scallops are definable in the model that is analyzed. On a two pass trench, there is a single scallop in the middle which may be quite large. Because the scallop may be large, and can be modeled, an additional debit is not required. The same applies for a three pass cut with two scallops.

Advantageously, embodiments described herein provide a tool and method of cutting for forming flow path trenches in integrally bladed disks by using single pass cutting. That is, advantageously, a single pass cut may enable a trench having a smooth, aerodynamic and easily modeled surface, eliminating the need for KT factors.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although described with respect to making a cut trench using the above described tools, those of skill in the art will appreciate that the tool may be used for finishing. For example, other types of cutting the flow path trenches may be used, even forming scallops during the cutting process. However, the final pass of a tool to form the trench may be with a tool as described herein, thus eliminating any scallops and forming a smooth surfaced trench.

Further, although described with respect to the tool starting to cut from within or between the airfoils, those of skill in the art will appreciate that the tool may begin cutting at an outer edge, and cut inward between adjacent airfoils. Such considerations may be based on the type of cutter, the machine driving the cutter, and/or the coolant being used during the cutting process.

Accordingly, the present disclosure is not to be seen as limited by the foregoing description, but is only limited by the scope of the appended claims.

The following clauses set out features of the present disclosure which may or may not presently be claimed in this application but which may form basis for future amendments or a divisional application.
1. A method of forming a flow path trench in an integrally bladed disk, the method comprising:
   tilting a cutting tool relative to a plane defined by the integrally bladed disk;
   driving the cutting tool at a cutting speed; and
   moving the cutting tool in a multiple dimensional movement to cut a flow path trench in a surface of the integrally bladed disk.
2. The method of clause 1, wherein a relative incline of a cutting action is between and including 2° and 30°, wherein the relative incline is a combination of the tilting of the cutting tool and the multiple dimensional movement.
3. The method of clause 1, wherein the tool includes a dovetail shaped cutting head.
4. The method of clause 1, further comprising performing a plurality of cuts, with each subsequent cut performed at an increasingly higher cutting speed and/or at a greater cutting depth.
5. The method of clause 1, wherein the cut is performed in a final single pass of the cutting tool over a surface of the integrally bladed disk.
6. The method of clause 1, wherein the flow path trench is a feature that causes a discontinuity in a hoop direction of the integrally bladed disk.
7. The method of clause 1, wherein the flow path trench is cut with a trench surface having a smooth surface created by a single tool pass.
8. The method of clause 1, wherein the cut is performed twice to form the flow path trench with a single scallop in a trench surface.
9. The method of clause 1, wherein the cut is performed three times to form the flow path trench with two scallops in a trench surface.
10. An integrally bladed disk formed by the method of clause 1.
11. An integrally bladed disk, comprising:
   a rotor disk having a rim the periphery of which forms a flow surface;
   integrally formed blades circumferentially spaced and extending radially outward from the rim to define a flow path therebetween, wherein a base of each of the blades has a fillet; and
   a plurality of flow path trenches formed in the rim and disposed adjacent and between the blades along the flow surface, each flow path trench having a trench surface defined as a cut surface of the flow path trench, wherein the trench surface is smooth.
12. The integrally bladed disk of clause 11, wherein the flow path trench is formed by a single pass of a cutting tool.
13. The integrally bladed disk of clause 11, wherein the flow path trench is a feature that causes a discontinuity in a hoop direction of the integrally bladed disk.
14. The integrally bladed disk of clause 11, wherein the flow path trench includes a single scallop in the trench surface.
15. The integrally bladed disk of clause 11, wherein the flow path trench includes two scallops in the trench surface.
16. The integrally bladed disk of clause 11, wherein the flow path trench is formed by two or more passes of a cutting tool.
17. A gas turbine engine having a stress relief feature, the engine comprising:
   a rotor disk having a rim the periphery of which forms a flow surface;
   integrally formed blades circumferentially spaced and extending radially outward from the rim to define a flow path therebetween, wherein a base of each of the blades has a fillet, and wherein the blades and the rotor disk define an integrally bladed disk; and
   a plurality of flow path trenches formed in the rim and disposed adjacent and between the blades along the flow surface, each flow path trench having a trench surface defined as a cut surface of the flow path trench, wherein the trench surface is smooth,
   wherein the flow path trench is a feature that causes a discontinuity in a hoop direction of the integrally bladed disk.
18. The gas turbine engine of clause 17, wherein the flow path trench is formed by a single pass of a cutting tool.
19. The gas turbine engine of clause 17, wherein the flow path trench is formed by two or more passes of a cutting tool.
20. The gas turbine engine of clause 17, wherein the flow path trench includes at least one scallop in the trench surface.

## Claims

1. A method of forming a flow path trench (216a; 216b; 216c; 316) in an integrally bladed disk (200; 300; 500), the method comprising:
tilting a cutting tool (330; 430; 530) relative to a plane defined by the integrally bladed disk;
driving the cutting tool at a cutting speed; and
moving the cutting tool in a multiple dimensional movement to cut a flow path trench in a surface of the integrally bladed disk.

2. The method of claim 1, wherein a relative incline of a cutting action is between and including 2° and 30°, wherein the relative incline is a combination of the tilting of the cutting tool (330; 430; 530) and the multiple dimensional movement.

3. The method of claim 1 or 2, wherein the tool (330; 430; 530) includes a dovetail shaped cutting head (423).

4. The method of claim 1, 2 or 3, further comprising performing a plurality of cuts, with each subsequent cut performed at an increasingly higher cutting speed and/or at a greater cutting depth.

5. The method of claim 1, 2 or 3, wherein the cut is performed in a final single pass of the cutting tool over a surface of the integrally bladed disk (200; 300; 500).

6. The method of any preceding claim, wherein the flow path trench (216a; 216b; 216c; 316) is a feature that causes a discontinuity in a hoop direction of the integrally bladed disk (200; 300; 500), preferably wherein the flow path trench is cut with a trench surface (317) having a smooth surface created by a single tool pass.

7. The method of any of claims 1 to 4 or 6, wherein the cut is performed twice to form the flow path trench (216a; 216b; 216c; 316) with a single scallop in a trench surface (317), or wherein the cut is performed three times to form the flow path trench with two scallops in a trench surface.

8. An integrally bladed disk (200; 300; 500) formed by the method of any preceding claim.

9. An integrally bladed disk (200; 300; 500), comprising:
a rotor disk having a rim (204) the periphery of which forms a flow surface (210);
integrally formed blades (208a; 208b; 308; 508) circumferentially spaced and extending radially outward from the rim to define a flow path (224) therebetween, wherein a base of each of the blades has a fillet (222); and
a plurality of flow path trenches (216a; 216b, 216c; 316) formed in the rim and disposed adjacent and between the blades along the flow surface, each flow path trench having a trench surface (317) defined as a cut surface of the flow path trench, wherein the trench surface is smooth.

10. The integrally bladed disk (200; 300; 500) of claim 9, wherein the flow path trench (216a; 216b; 216c; 316) is formed by a single pass of a cutting tool (330; 430; 530), or wherein the flow path trench is formed by two or more passes of a cutting tool.

11. The integrally bladed disk (200; 300; 500) of claim 9 or 10, wherein the flow path trench (216a; 216b; 216c; 316) is a feature that causes a discontinuity in a hoop direction of the integrally bladed disk.

12. The integrally bladed disk (200; 300; 500) of any of claims 9 to 11, wherein the flow path trench (216a; 216b; 216c; 316) includes a single scallop in the trench surface (317), or wherein the flow path trench includes two scallops in the trench surface.

13. A gas turbine engine (101) having a stress relief feature, the engine comprising the integrally bladed disk (200; 300; 500) of claim 11, wherein the flow path trench (216a; 216b; 216c; 316) is a feature that causes a discontinuity in a hoop direction of the integrally bladed disk.

14. The gas turbine engine (101) of claim 13, wherein the flow path trench (216a; 216b; 216c; 316) is formed by a single pass of a cutting tool (330; 430; 530), or wherein the flow path trench is formed by two or more passes of a cutting tool.

15. The gas turbine engine (101) of claim 13 or 14, wherein the flow path trench (216a; 216b; 216c; 316) includes at least one scallop in the trench surface (317).
